# EUROPEAN PATENT APPLICATION

(11) **EP 4 712 242 A1**
(43) Date of publication of application: **18.03.2026**
(21) Application number: 24200173.3
(22) Date of filing: 13.09.2024
(51) Int. Cl.: H01M 50/325

(54) **FOLDED MEMBRANE CARRIER FOR BATTERY CASE VENTING**

(71) Applicant: MANN+HUMMEL GmbH, 71636 Ludwigsburg (DE)
(72) Inventor: PLOPPA, Martin, 71636 Ludwigsburg (DE); VOGT, Sabine, 71636 Ludwigsburg (DE)
(74) Representative: Mann + Hummel Intellectual Property

(57) **Abstract**

A venting unit (34) for a battery case, the venting unit (34) comprising a housing part (36) delimiting a vent opening (38), and a membrane assembly (10; 10') spanning across the vent opening (38) and comprising a membrane carrier (12; 12') comprising carrier segments (14) and flow windows (16) respectively disposed through the carrier segments (14), and membrane segments (18) respectively covering the flow windows (16). Each adjacent pair of the carrier segments (14) is folded against one another along a film hinge (20) disposed therebetween.

## Description

### Technical Field

Embodiments refer to a venting unit for a battery case, the venting comprising a housing part, which delimits a vent opening and a membrane assembly, which spans across the vent opening.

### Background Art

Such venting units are generally known.

The internal pressure of battery cases, in particular for traction batteries of electric vehicles, typically needs to be equalized with an ambient pressure to avoid damage to the battery case. At the same time, ingress of dust or water into the battery case needs to be avoided, for instance during use on gravel roads or during high-pressure washing. To this end, venting units with membranes are employed.

In the event of a thermal runaway, explosion of the battery case may be prevented by emergency degassing units, which have a spring-loaded valve or a burst membrane. These emergency degassing units typically have a rather high activation pressure (e.g. at least 250 mbar) and stay open, once they have been triggered.

Sometimes, only one or a few battery cells fail. In this case, a moderate amount of gas and pressure (typically 70-90 mbar, sometimes up to 120 mbar) is generated and needs to be released. This is known as "cold venting". In this case, the battery may be repaired, if required. However, the amount of gas to be released during cold-venting events cannot be relieved through conventional venting units, since their membrane area is too small. Increasing the membrane area is typically not possible due to limited installation space at the battery case. On the other hand, adapting emergency degassing units for cold venting would allow the ingress of dust or water once they have been activated. Further, adapting spring-loaded valves for cold-venting is not readily possible, since the pressure in cold venting incidents is rather low, so that the valve might unintentionally open in rough operating conditions, e.g. when driving on a gravel road or hitting a pot-hole.

It is an object of the embodiments to allow for cold venting of a battery case while preventing the ingress of dust and water into a battery case.

This is achieved by a venting unit according to claim 1, a battery case according to claim 10, a battery according to claim 11, and a method according to claim 12. Advantageous embodiments and variants are given in the subclaims and the description.

### Summary

In accordance with the embodiments, a venting unit for a battery case is provided. The venting unit comprises a housing part delimiting a vent opening. In use, the vent opening may be aligned with an aperture of the battery case. The venting unit further comprises a membrane assembly spanning across the vent opening. The membrane assembly allows gas to exit or enter through the vent opening, while blocking water and dust.

According to the embodiments, the membrane assembly comprises a membrane carrier comprising carrier segments and flow windows respectively disposed through the carrier segments. The membrane assembly further comprises membrane segments respectively covering the flow windows. Typically, a separate membrane segment is provided for each flow window. However, in special embodiments, the membrane segments of some or all flow windows might also be monolithic with one another. Typically, one flow window is provided per carrier segment. However, it is also conceivable to provide several flow windows per carrier segment. In the latter case, all flow windows of one carrier segment are typically covered by one membrane segment.

The membrane carrier is provided with film hinges (also referred to as integral hinges) respectively between adjacent carrier segments. Each adjacent pair of the carrier segments is folded against one another along a film hinge disposed therebetween. By folding the membrane carrier at the film hinges between its carrier segments, the membrane is erected in the direction perpendicular to the diameter or width of the vent opening. This allows increasing the total area available for gas exchange. While the area of a conventional flat membrane is bounded by the area of the vent opening, the folded membrane assembly provides for the total area of the flow windows (i.e. the membrane area available for gas exchange) to exceed the area of the vent opening. With this design, the gas volumes emerging in a cold venting incident may be released from a battery case through an aperture of the size of a conventional venting unit. The membrane segments are designed to stay intact during such a cold venting incident. Thus, the case remains sealed against the environment with respect to dust or water.

A total area of the flow windows may be at least 1.3-times, in particular at least 1.5-times, as large as a cross-sectional area of the vent opening. Thus, relatively high venting volumes can be achieved with small apertures in the case and correspondingly small vent openings.

The membrane segments may be made from polytetrafluoroethylene, in particular sintered polytetrafluoroethylene. Alternatively, the membrane segments may be made from polyethylene terephthalate (PET) or other perfluoroalkyl and polyfluoroalkyl substances (PFAS) and perfluorooctanoic acid (PFOA), free-membrane materials.

The membrane carrier is generally one monolithic plastics part. The membrane carrier may be made for instance from polypropylene.

Typically, at least four, in particular at least six, carrier segments are provided. Note that in most embodiments an even number of carrier segments is provided. This is advantageous for sealing end segments of the membrane carrier against the housing part, since both end segments may be sealed in the same plane. Each end segment may be linked to the respective outmost carrier segment by a film hinge.

A perimeter of the membrane carrier may be embedded into the housing part. This may yield a secure and watertight connection of the housing part and the membrane carrier. For efficient manufacturing, the housing part may be injection molded over the membrane carrier. To this end, after attaching the membrane segments and folding, the membrane carrier is placed in a mold for manufacturing the housing part. In other words, the folded membrane assembly is an insert when molding the housing part.

The membrane segments may be respectively welded to the carrier segments around the flow windows, in particular by ultrasonic welding, hot-plate welding, or heat sealing. This allows for efficient manufacturing. Further, a watertight connection may be obtained.

In embodiments, each adjacent pair of the carrier segments may be directly connected to one another by the film hinge. In this case, adjacent membrane segments enclose an acute angle, when the membrane assembly is installed in the housing part. A particular simple design of the membrane carrier and a large total area of the flow windows may be obtained.

In other embodiments, the membrane carrier may further comprise intermediate segments, each of which is disposed between a respective adjacent pair of the carrier segments and is connected to the respective adjacent pair of the carrier segments by the film hinge. This design reduces the bending angle at each film hinge, which may prevent damage (and leakage) at the film hinges. With this design, the membrane segments may be arranged parallel to one another, in particular perpendicular to a width of the vent opening, when the membrane assembly is installed in the housing part.

The film hinges typically each comprise a slit in one surface of the membrane carrier and a groove in the opposing surface. Between the slit and the groove, the material of the membrane carrier is continuous. Thus, the film hinges themselves are gas- and watertight. The continuous material layer forms the film, which is bent, when folding the membrane carrier.

Film hinges are arranged for bending in alternate directions, i.e. with slits and grooves on different sides of the membrane carrier. If adjacent carrier segments with flow windows are directly connected to one another by one film hinge, the orientation of the film hinges changes from each film hinge to the next one. If intermediate segments of the membrane carrier are arranged between adjacent carrier segments with flow windows, wherein the intermediate segments are connected to both neighboring carrier segments by a film hinge, the orientation of a pair of film hinges at one intermediate segment is the same, while the next pair of film hinges faces in the other direction.

The vent opening may have a circular cross section. This can be advantageous for manufacturing the venting unit, e.g. since no particular rotational orientation of the folded membrane assembly needs to be ensured when overmolding the housing part. Further, apertures in battery cases are often required to be circular. Thus, a circular vent opening allows for good exploitation of the area of the aperture for venting.

The venting unit may further comprise a base body in which the housing part is fixed. The base body may be designed for being fixed to the battery case. A seal may be provided at the base body for sealing against the battery case. By adapting the base body to the respective battery case, the same membrane assembly and housing part may be used, with different interfaces, i.e. base bodies, at the respective battery case.

The housing part is typically fixed to the base body, if provided, in particular by spin welding (rotary friction welding). This allows for efficient manufacturing. Further, a watertight connection can be reliably obtained by spin welding.

The venting unit may further comprise cover fixed to the housing part or the base body. The cover protects the membrane segments from damage, e.g. when high-pressure washing or when debris impacts the venting unit. The cover may be attached by ultrasonic welding. Alternatively, a snap fit may be established.

The embodiments also refer to a battery case comprising an aperture and the venting unit, as described above, disposed at the aperture of the battery case.

An emergency degassing unit may be arranged at a further aperture of the case. The case may have several further apertures, each provided with an emergency degassing unit, in particular while only one venting unit is provided.

The embodiments further refer to a battery comprising the battery case, as described above, and further comprising battery cells disposed inside the battery case. The battery cells may be lithium-ion-cells. While having several well-known advantages, lithium-ion-cells are prone to failure, if poorly manufactured or subject to excessive mechanical load. Obviously, other types of battery cells are also conceivable.

Finally, the embodiments relate to a method of manufacturing the venting unit, as described above. The method comprises: A) providing the membrane carrier comprising the carrier segments and the flow windows; B) covering the flow windows respectively with the membrane segments and fixing the membrane segments respectively to the carrier segments; C) folding the membrane carrier between each adjacent pair of the carrier segments; and D) molding the housing part around the folded membrane carrier.

Steps A) to D) are generally performed in the indicated order.

The membrane carrier is typically provided as a flat plastics part. Film hinges may be pre-formed in the flat membrane carrier between its carrier segments.

In step B), separate membrane segments may be arranged at the flow windows and be individually fixed around each flow window. Alternatively, one larger piece of membrane material may be provided and arranged to cover all flow windows. In the latter case, the integral piece of membrane material is typically severed, e.g. by punching, between the flow windows to form separate membrane segments. For connecting the membrane segments and the membrane carrier, ultrasonic welding may be employed. It is possible to include a punching tool into an ultrasonic welding tool. Thus, in a one-step process, a monolithic membrane material may be separated to form several membrane segments while being fixed to the carrier.

At each carrier segment, a continuously closed connection of the membrane segment to the membrane carrier is established around the respective flow window (or flow windows, if more than one flow window is provided per carrier segment). Several flow windows per carrier segment may be surrounded commonly or individually by a line of fixation to the membrane segment.

Note that, for folding at the convex hinges (in a view onto the membrane-covered side of the carrier), the membrane generally needs be separated, since the membrane material might not withstand stretching to the required extend. At the concave hinges, one membrane segment might cover the flow windows of two adjacent carrier segments. However, individual membrane segments per carrier segment are advantageous, with respect to folding the carrier.

After folding, the membrane assembly (i.e. the carrier with the membrane segments fixed around the flow windows) is inserted into a mold for manufacturing the housing part. By molding the housing part to the perimeter of the membrane carrier, molecular bonding may be established between these parts.

The method may further comprise E) testing watertightness of the membrane assembly overmolded with the housing part. Thus, in one testing step, it may be established if the connection between the membrane carrier and the housing part as well as all connections between the membrane carrier and the membrane segments have been properly manufactured and no leaks occur.

The method may further comprise F) attaching the housing part to a base body, in particular by spin welding. Note, that testing for watertightness is advantageously performed prior to installation of the base body. With spin welding, it is extremely unlikely for leaks being formed. Further since the same design of housing part and membrane assembly may be used with different base bodies, it suffices to provide testing equipment adapted to the design of the housing part.

In order to protect the membrane assembly, the method may further comprise G) attaching a cover to the housing part or the base body. Note that the cover may be installed prior to, at the same time, or after attaching the base body. Testing for watertightness is advantageously performed prior to installation of the cover.

### Brief Description of Drawings

Other advantages and features of the embodiments will be appreciated from the following description of the embodiments with reference to the figures of the drawing, which show significant details, and from the claims. The individual features, as described above or explained below, may each be implemented individually or implemented together in any useful combination in variants of the embodiments.
Fig. 1 shows a membrane assembly for the embodiments, the membrane assembly comprising a folded membrane carrier with attached membrane segments, in a schematic perspective view.
Fig. 2 shows the membrane assembly of Fig. 1 in a schematic sectional view.
Fig. 3 shows a film hinge of the membrane carrier of the membrane assembly of Fig. 1, in an enlarged schematic view along its folding axis.
Fig. 4 shows a venting unit according to the embodiments, comprising the membrane assembly of Fig. 1, which is embedded in a housing part, in a schematic sectional view.
Fig. 5 shows the venting unit of Fig. 4 attached to a base member, in a schematic perspective view.
Fig. 6 shows a schematic sectional view of the assembly of Fig. 5.
Fig. 7 shows the assembly of Fig. 5 with an attached cover, in a schematic perspective view.
Fig. 8 shows a schematic sectional view of the assembly of Fig. 7.
Fig. 9 shows a battery according to the embodiments, in a schematic sketch.
Fig. 10 shows another membrane assembly, comprising a folded membrane carrier with attached membrane segments, for the embodiments, in a schematic sectional view.
Fig. 11 shows a schematic flow diagram of a manufacturing method according to the embodiments.

### Detailed Description

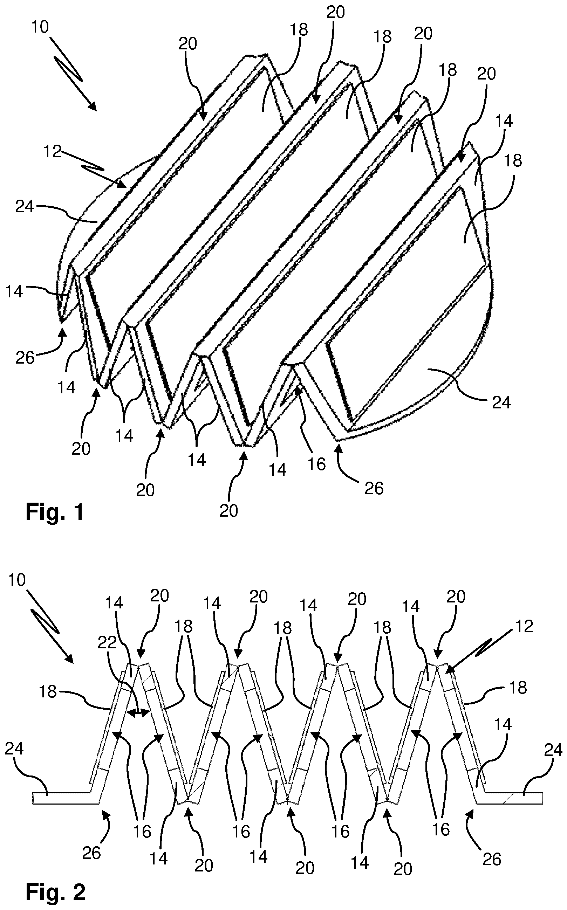

Figs. 1 and 2 show a membrane assembly 10. A membrane carrier 12 comprises several carrier segments 14, each having a flow window 16. The flow windows 16 are each covered by a membrane segment 18.

The membrane segments 18 may consist of sintered polytetrafluoroethylene. The membrane segments 18 may have a thickness between 0.02 mm and 0.2 mm.

The membrane carrier may be made as an integrally injection molded part from e.g. polypropylene.

The membrane segments 18 are attached, in particular by ultrasonic welding, to the carrier segments 14. A sealing bond around the perimeter of the flow windows 16 and membrane segments 18 is established.

Adjacent carrier segments 14 are connected to one another by film hinges 20. The membrane carrier 12 is folded along the film hinges 20. Thus, a three-dimensional shape of the membrane assembly 10 is obtained. In these embodiments, adjacent membrane segments 18 and carrier segments 14 enclose an acute angle 22. For instance, angle 22 may be between 25° and 50°.

End segments 24 of the membrane carrier 12 are connected to its both outermost carrier segments 14 by further film hinges 26. The end segments 24 are completely closed, i.e. they do not have flow windows or membrane segments attached. Both end segments 24 extend in a common plane.

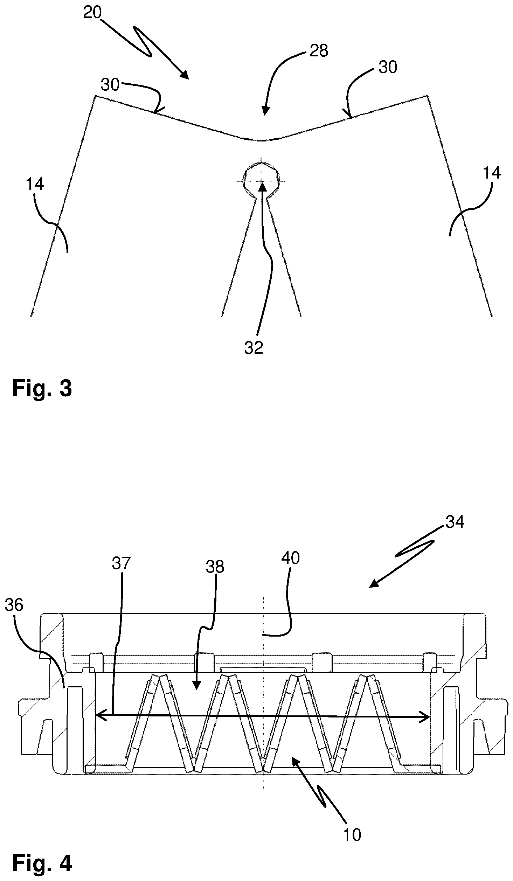

Fig. 3 shows one of the folded film hinges 20. To form the film hinge 20, the material of the membrane carrier 12 is locally thinned, such that a slim film of continuous material extends between the adjacent carrier segments 14. A slit 28 with faces 30, which faces 30 are separated from one another in the folded state, is introduced from the convex side of the film hinge 20. A groove 32 is provided on the concave side of the film hinge 20.

Fig. 4 shows a venting unit 34 comprising the membrane assembly 10. The folded membrane assembly 10 is embedded in a housing part 36. An overmolding technique is employed to firmly bond the housing part 36 to the outer perimeter of the membrane carrier 12, i.e. free edges of the carrier segments 14 and of the end segments 24.

The membrane assembly 10 spans across the diameter 37 of a vent opening 38, delimited by the housing part 36. In these embodiments, the vent opening 38 has a circular cross section. Due to folding of the membrane carrier 12, the flow windows 16 and membrane segments 18 are inclined relative to an axis 40 of the vent opening 38. Thus, a total area of the membrane-covered flow windows 16 exceeds the cross sectional area (measured perpendicular to axis 40) of the vent opening 38. In these embodiments, the total area of the flow windows 16 is more than 1 .6-times the cross sectional area of the vent opening 38.

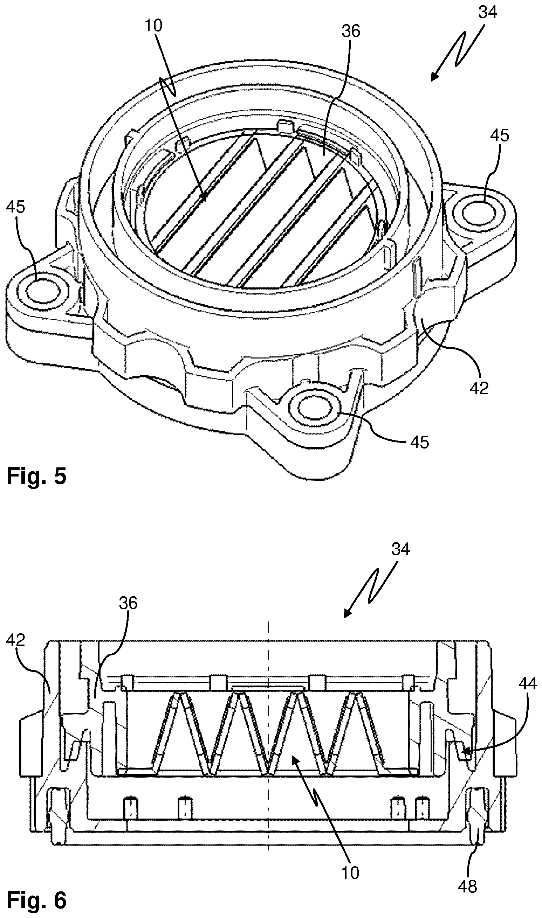

As shown in Figs. 5 and 6, a base body 42 may be attached to the housing part 36 of the venting unit 34. A spin welding technique may be employed to obtain a circumferentially closed connection 44.

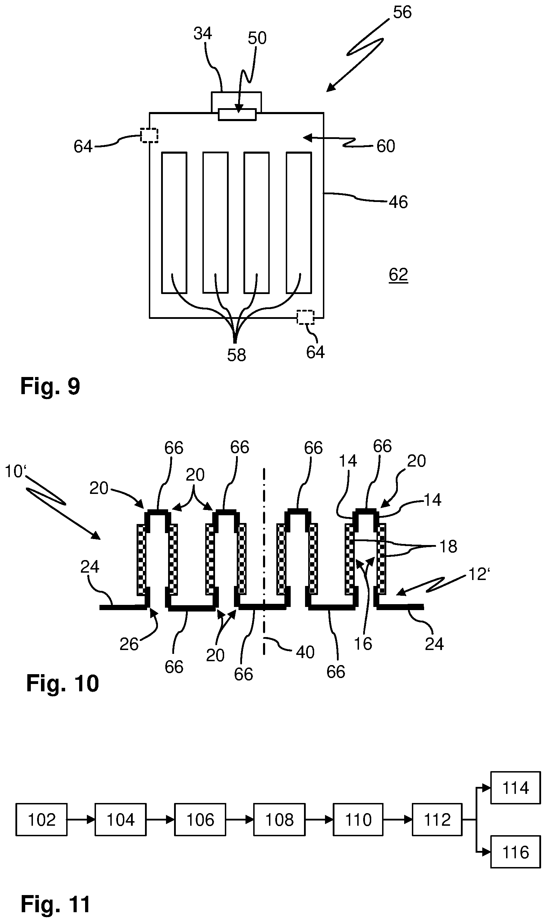

The base body 42 has attachment tabs 45, for fixing the venting unit 34 to a battery case 46, see Fig. 9, e.g. by passing screws through the attachment tabs 45.

A seal 48 may be provided at the base body 42. In the installed state, the seal 48 seals the venting unit 34 against the battery case 46 around an aperture 50.

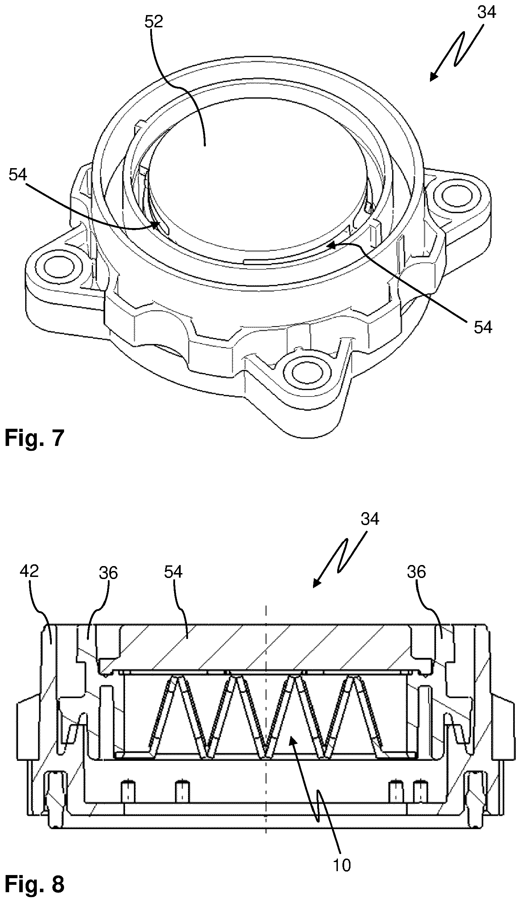

A cover 52 is provided above the membrane assembly 10 (i.e. on the side facing away from the battery case 46), in order to protect the membrane segments 18 against damage, see Figs. 7 and 8. In these embodiments, the cover 52 is fixed to the housing part 36, e.g. by ultrasonic welding. Airflow between the cover 52 and the housing part 36 is permitted through orifices 54.

As depicted in Fig. 9, a battery 56 is obtained by arranging battery cells 58, e.g. lithium ion cells, inside the battery case 46.

The venting unit 34 at aperture 50 allows for pressure equalization between an interior space 60 of the battery case 46 and an environment 62. If one (or few) of the battery cells 58 might fail, the resulting amount of gas is released through the venting unit 34, in a so-called cold venting event. After the cold venting event, the venting unit 34 - and thus the battery case 46 - is still closed by the membrane segments 18. The interior space 60 remains protected against ingress of dust and water.

In case of a thermal runaway, when many or all of the battery cells 58 fail and eventually catch fire, hot gas is released into the environment 62 through one or several emergency degassing units 64. If the activation threshold of the emergency degassing units 64 is exceeded, they open and typically do not close again.

Fig. 10 shows another membrane assembly 10'. As the membrane assembly 10 depicted in Figs. 1 and 2, the membrane assembly 10' comprises a membrane carrier 12', which has carrier segments 14. Membrane segments 18 cover flow windows 16 of the carrier segments 14. Likewise, the membrane assembly 10' is installed in a housing part 36 to form a venting unit 34, as described above with reference to Figs. 4 to 9.

In the embodiments of Fig. 10, the membrane carrier 12' has intermediate segments 66, which are connected to neighboring carrier segments 14 by film hinges 20. In the folded state, the carrier segments 14 and the membrane segments 18 may extend parallel to one another and parallel to the axis 40 of the vent opening 38 (cf. also Fig. 4). The film hinges 20 and film hinges 26 between the outermost carrier segments 14 and end segments 24 may be designed as described above with reference to Fig. 3.

A method for manufacturing the venting unit 34 with the membrane assembly 10 or 10' will be described with additional reference to Fig. 11.

First, the membrane carrier 12/12' is provided as a flat plastics part (cf. step 102). The flow windows 16 and film hinges 20, 26 are already present in the monolithic body of the membrane carrier 12/12'.

Next the membrane segments 18 are arranged to cover the flow windows 16 (cf. step 104) and a circumferentially closed connection of the membrane segments 18 around the flow windows 16 of each carrier segment 14 is established (cf. step 106). Ultrasonic welding may be employed to this end. During welding, a monolithic membrane sheet may also be separated to form separate membrane segments 18. Alternatively, separate membrane segments 18 may be provided in step 104.

Next, the membrane carrier 12/12' with the attached membrane segments 18 is folded at its film hinges 20, 26 (cf. step 108). A three-dimensional configuration of the membrane assembly 10 is obtained by folding.

The folded membrane assembly 10 is placed in a mold for injection molding of the housing part 36. By injection of plastics material, the housing part 36 is formed (cf. step 110). The membrane carrier 12/12' is embedded into and bonded to the housing part 36 along the perimeter of the membrane carrier 12/12' and the vent opening 38. In particular, the membrane carrier 12/12' positively engages into the housing part 36. Advantageously, a molecular bond is established between the membrane carrier 12/12' and the housing part 36.

The venting unit 34 resulting from step 110 may be tested for watertightness in a step 112. Thus, in one single testing step, it is verified if all membrane-carrier-connections and the carrier-housing-connection meet their requirements.

Finally, a base body 42 and a cover 52 may be installed, cf. steps 114 and 116. Note that generally there is no specific order for mounting of the base body 42 and cover 52. In serial production, different base bodies may be provided to adapt identical housing parts to specific battery cases.

In summary, the embodiments relate to a venting unit for a battery case. A housing part defines a vent opening having an open cross section and an axis perpendicular to the cross section. The cross section of the vent opening is covered by a membrane assembly. The membrane assembly has a three-dimensional configuration extending along the axis. Membrane segments are arranged at an angle relative to the cross section of the vent opening. This allows to provide an open membrane area, which exceeds the cross sectional area of the vent opening. A membrane carrier, which holds the membrane segments in their erect configuration, is folded along film hinges to define the three-dimensional configuration. The film hinges are provided between carrier segments, each having a flow opening covered by a membrane segment.

### Reference Signs List

Membrane assembly 10; 10'
Membrane carrier 12; 12'
Carrier segments 14
Flow window 16
Membrane segment 18
Film hinges 20
Angle 22
End segments 24
Film hinges 26
Slit 28
Faces 30
Groove 32
Venting unit 34
Diameter 37
Housing part 36
Vent opening 38
Axis 40
Base body 42
Connection 44
Attachment tabs 45
Battery case 46
Seal 48
Aperture 50
Cover 52
Orifices 54
Battery 56
Battery cells 58
Interior space 60
Environment 62
Emergency degassing unit 64
Intermediate segments 66
Providing 102 a membrane carrier
Covering 104 flow windows
Fixing 106 membrane segments
Folding 108 a membrane carrier
Molding 110 a housing part
Testing 112 watertightness
Attaching 114 the housing part
Attaching 116 a cover

## Claims

1. A venting unit (34) for a battery case, the venting unit (34) comprising:
a housing part (36) delimiting a vent opening (38); and
a membrane assembly (10; 10') spanning across the vent opening (38) and comprising:
a membrane carrier (12; 12') comprising carrier segments (14) and flow windows (16) respectively disposed through the carrier segments (14); and
membrane segments (18) respectively covering the flow windows (16),
wherein each adjacent pair of the carrier segments (14) is folded against one another along a film hinge (20) disposed therebetween.

2. The venting unit (34) according to claim 1, wherein a perimeter of the membrane carrier (12; 12') is embedded into the housing part (36).

3. The venting unit (34) according to claim 1 or 2, wherein the membrane segments (18) are respectively welded to the carrier segments (14) around the flow windows (16).

4. The venting unit (34) according to any one of claims 1 to 3, wherein each adjacent pair of the carrier segments (14) is directly connected to one another by the film hinge (20).

5. The venting unit (34) according to any one of claims 1 to 3, wherein the membrane carrier (12') further comprises intermediate segments (66), each of which is disposed between a respective adjacent pair of the carrier segments (14) and is connected to the respective adjacent pair of the carrier segments (14) by the film hinge (20).

6. The venting unit (34) according to any one of the preceding claims, wherein a total area of the flow windows (18) is at least 1.3-times, in particular at least 1.5-times, as large as a cross-sectional area of the vent opening (38).

7. The venting unit (34) according to any one of the preceding claims, wherein the vent opening (38) has a circular cross section.

8. The venting unit (34) according to any one of the preceding claims, further comprising a base body (42) in which the housing part (36) is fixed.

9. The venting unit (34) according to any one of the preceding claims, further comprising a cover (52) fixed to the housing part (36) or the base body (42).

10. A battery case (46) comprising:
an aperture (50); and
the venting unit (34) according to one of the preceding claims and disposed at the aperture (50).

11. A battery (56) comprising:
the battery case (46) according to claim 10; and
battery cells (58) disposed inside the battery case (46).

12. A method of manufacturing the venting unit (34) according to any one of claims 1 to 9, the method comprising:
A) providing (102) the membrane carrier (12; 12') comprising the carrier segments (14) and the flow windows (16);
B) covering (104) the flow windows (16) respectively with the membrane segments (18) and fixing (106) the membrane segments (18) respectively to the carrier segments (14);
C) folding (108) the membrane carrier (12; 12') between each adjacent pair of the carrier segments (14); and
D) molding (110) the housing part (36) around the folded membrane carrier (12; 12').

13. The method according to claim 12, further comprising E) testing (112) watertightness of the membrane assembly (10; 10') overmolded with the housing part (36).

14. The method according to claim 12 or 13, further comprising F) attaching (114) the housing part (36) to a base body (42), in particular by spin welding.

15. The method according to any one of claims 12 to 14, further comprising G) attaching (116) a cover (52) to the housing part (36) or the base body (42).
